**Europäisches Patentamt**

**European Patent Office**

**Office européen des brevets**

(11) Veröffentlichungsnummer: **0 179 184**
**B1**

(12) **EUROPÄISCHE PATENTSCHRIFT**

(45) Veröffentlichungstag der Patentschrift:
**20.04.88**

(21) Anmeldenummer: **85102675.7**

(22) Anmeldetag: **08.03.85**

(51) Int. Cl.⁴: **C 09 D 5/44**

(54) Verfahren zur Herstellung kathodisch abscheidbarer Elektrotauchlack-Bindemittel.

(30) Priorität: **01.10.84 AT 3096/84**

(43) Veröffentlichungstag der Anmeldung:
**30.04.86 Patentblatt 86/18**

(45) Bekanntmachung des Hinweises auf die Patenterteilung:
**20.04.88 Patentblatt 88/16**

(84) Benannte Vertragsstaaten:
**BE CH DE FR GB IT LI NL SE**

(56) Entgegenhaltungen:
**EP - A - 0 002 517**
**EP - A - 0 068 243**
**EP - A - 0 080 165**
**FR - A - 2 013 612**

(73) Patentinhaber: **Vianova Kunstharz Aktiengesellschaft,
A-8402 Werndorf (AT)**

(72) Erfinder: **Paar, Willibald, Dr., Haberlandtweg 23,
A-8045 Graz (AT)**
Erfinder: **Daimer, Wolfgang, Dipl.-Ing.,
Rosenberggürtel 237, A-8010 Graz (AT)**

(74) Vertreter: **Pitter, Robert, Dr. et al,
Postfach 191 Leechgasse 21, A-8011 Graz (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der EP-A-0 068 243 werden Polyadditions/Polykondensationsprodukte, welche nach Protonierung für die kathodische Elektrotauchlackierung geeignete wasserverdünnbare Bindemittel darstellen, beschrieben. Die Produkte sind Additionsprodukte von Mannichbasen aus mit Polybutadienmaleinimiden modifizierten Polyphenolen, Dialkylaminen und Formaldehyd mit Epoxidharzen. In der Beschreibung wird auch die Möglichkeit des Zusatzes von Polybutadienölen oder anderer Kohlenwasserstofföle und anderer Verbindungen zu diesen Produkten erwähnt, ohne dass eine nähere Angabe über Menge und Zweck des Zusatzes gemacht wird.

Maleinsäureanlagerungsprodukte an Dienpolymerisate werden gemäss FR-A-2 013 612 in Kombination mit wärmereaktiven veretherten Resolcarbonsäuren als anodisch abscheidbare Elektrotauchlackbindemittel eingesetzt.

In der EP-A-0 080 165 werden kathodisch abscheidbare Elektrotauchlackbindemittel auf der Basis von Gemischen oder Umsetzungsprodukten aus basischen Harzen und Amidaminen, die durch Umsetzung von langkettigen Mono- und/oder Dicarbonsäuren mit Diaminen erhalten wurden, beschrieben. Als basische Harze werden bevorzugt Mannichbasen von Phenolen eingesetzt.

Auch die EP-A-0 002 517 beschreibt kathodisch abscheidbare Elektrotauchlacke auf Basis von Mannichbasen, wobei in diesem Falle als eine Komponente phenolmodifizierte Dien(co)polymeren eingesetzt werden.

In der EP-A1-0 158 128 wird ein Verfahren zur Herstellung von kathodisch abscheidbaren Elektrotauchlack-Bindemitteln auf der Basis von modifizierten Epoxidharzen beschrieben, welches dadurch gekennzeichnet ist, dass man ein Epoxidharz, welches mindestens 2 Epoxidgruppen und ein Epoxidäquivalentgewicht von 180 bis 1000 aufweist, mit

0,6 bis 1,0 Mol primäre Aminogruppen pro verfügbarer Epoxidgruppe, eines primären Monoalkylamins und/oder eines primären Alkylendiamins und/oder eines primär-tertiären Alkylendiamins und

0 bis 0,4 Mol pro verfügbarer Epoxidgruppe einer Carboxylverbindung oder eines sekundären Amines bei 50 bis 120°C bis zu einem Epoxidwert von praktisch Null umsetzt und das resultierende Epoxidharz-Amin-Addukt mit, bezogen auf 1 Mol NH-Gruppen,

0,5 bis 1 Mol eines ein- oder mehrkernigen Phenols und/oder Alkylphenols und/oder eines Aminoalkylierungsproduktes von monosubstituierten ein- oder zweikernigen Phenolen oder gegebenenfalls anteilig einer formaldehydreaktiven Verbindung vom Typ des Harnstoffs, des Melamins oder des Guanamins und mit

0,25 bis 0,9, vorzugsweise 0,6 bis 0,8 Mol Formaldehyd pro formaldehydreaktiver Stelle bei 50 bis 90°C bis zu einer weitgehenden Bindung des Formaldehyds umsetzt und das Reaktionsprodukt nach partieller oder vollständiger Neutralisation mit Säuren und gegebenenfalls nach Zusatz wasserverträglicher organischer Lösungsmittel mit Wasser verdünnt.

Die aus den gemäss diesem Verfahren hergestellten Bindemittel in geeigneter Weise formulierten Überzugsmittel zeigen ausgezeichnete Eigenschaften bei der elektrischen Abscheidung sowie eine ausgezeichnete Stabilität in Form des Badmaterials. Der Grund dafür dürfte in der Hydrolysefestigkeit des durch direkte Verknüpfung von Epoxidharz, Amin und Phenol entstandenen Moleküls zu finden sein. Die Produkte ergeben bereits bei Einbrenntemperaturen von 150°C auch ohne Verwendung von Katalysatoren Filme optimaler Korrosionsfestigkeit. Die Menge der Spaltprodukte beim Einbrennen ist gering und besteht im wesentlichen aus Wasser und geringen Anteilen an Formaldehyd.

Es wurde nun gefunden, dass man die Eigenschaften dieser Bindemittel durch speziell ausgewählte Kombinationspartner in wünschenswerter Weise abwandeln und den jeweiligen Anforderungen anpassen kann, wenn man als Kombinationspartner ungesättigte Verbindungen einsetzt, welche unter den Verfahrensbedingungen der Elektroabscheidung praktisch wasserunlöslich und mit den Basisharzen verträglich sind.

Die vorliegende Erfindung betrifft demgemäss ein Verfahren zur Herstellung von katodisch abscheidbaren Elektrotauchlack-Bindemitteln auf der Basis von modifizierten Epoxidharzen, welches dadurch gekennzeichnet ist, dass man

(A)

95 bis 50 Gew.-%, vorzugsweise 90 bis 70 Gew.-% (bezogen auf Feststoff) eines Umsetzungsproduktes, welches aus einem Epoxidharz mit mindestens 2 Epoxidgruppen und einem Epoxidäquivalentgewicht von 180 bis 1000 durch Reaktion mit

0,6 bis 1,0 Mol primäre Aminogruppen pro verfügbarer Epoxidgruppe, eines primären Monoalkylamins und/oder eines primären Alkylendiamins und/oder eines primär-tertiären Alkylendiamins und

0 bis 0,4 Mol pro verfügbarer Epoxidgruppe einer Carboxylverbindung oder eines sekundären Amins bei 50 bis 120°C bis zu einem Epoxidwert von praktisch Null und weiterer Umsetzung des resultierenden Epoxidharz-Amin-Adduktes mit, bezogen auf 1 Mol NH-Gruppen,

0,5 bis 1 Mol eines ein- oder mehrkernigen Phenols und/oder Alkylphenols und/oder eines Aminoalkylierungsproduktes von monosubstituierten ein- oder zweikernigen Phenolen oder gegebenenfalls anteilig einer formaldehydreaktiven Verbindung vom Typ des Harnstoffs, des Melamins oder des Guanamins und mit

0,25 bis 0,9, vorzugsweise 0,6 bis 0,8 Mol Formaldehyd pro formaldehydreaktiver Stelle bei 50 bis 90 °C bis zu einer weitgehenden Bindung des Formaldehyds erhalten wurde, vor der Neutralisation mit Säuren und

gegebenenfalls nach Zugabe wasserverträglicher organischer Hilfslösungsmittel mit

(B)

5    bis 50   Gew.-%, vorzugsweise 10 bis 30 Gew.-% (bezogen auf Festharz) einer unter den Verfahrensbedingungen der Elektroabscheidung praktisch wasserunlöslichen und mit dem Basisharz verträglichen Zumischkomponente, ausgewählt aus der Gruppe

(a) trockene Öle mit einer Jodzahl von mehr als 120, sowie synthetische Ester der in diesen Ölen enthaltenen Fettsäuren oder von Tallölfettsäuren mit Polyolen, gegebenenfalls auch vor polymerisierte Formen dieser genannten Verbindungen,

(b) Maleinsäureanlagerungsprodukte an hydroxylfreie Verbindungen der unter (a) geannten Art oder an ungesättigte Kohlenwasserstoffoligomere, -polymere oder -copolymere mit einem Molekulargewicht von 400 bis 3000, deren Carboxyl- oder Anhydridgruppen praktisch vollständig in Ester-, Amid- oder Imidgruppen übergeführt wurden,

(c) Verbindungen, welche mindestens 2 (Meth)-acryl- oder Allyldoppelbindungen aufweisen,

mischt, die Mischung durch partielle Neutralisation der basischen Gruppen mit anorganischen und/oder organischen Säuren in eine wasserverdünnbare Salzform überführt und, gegebenenfalls unter teilweiser Entfernung des organischen Lösungsmittels, mit Wasser verdünnt.

Beim Einsatz der anspruchsgemäss definierten Kombinationspartner für die Basisharze (Komponente A) wurde überraschenderweise festgestellt, dass neben Verbesserungen bezüglich des Schichtaufbaues bei der Elektroabscheidung und der Oberflächenqualität der eingebrannten Filme auch eine Verbesserung der Vernetzung erfolgt. Es könnte angenommen werden, dass beim Einbrennen zwischen den Resolgruppierungen der Basisharze und den ungesättigten Kombinationspartnern Reaktionen stattfinden, wie sie zwischen Alkylphenolresolen und ungesättigten Ölen nach HULTZSCH (Chromanringbildung) oder VAN DER MEER (Kettenverknüpfung) erfolgen (siehe beispielsweise H. WAGNER und H.F. SARX «Lackkunstharze», C. Hanser Verlag München, 1971). Die bereits bei der alleinigen Verwendung der Basisharze gegenüber dem Stand der Technik erzielbaren Vorteile, wie leichte Herstellbarkeit, ausgezeichnete Badstabilität und niedrige Abspaltverluste, werden nicht oder nur unwesentlich beeinflusst.

Die für das erfindungsgemässe Verfahren einsetzbaren Epoxidharze sind handelsübliche Di- oder Polyepoxidverbindungen, wie sie durch Umsetzung von mehrwertigen Phenolen, insbesondere dem Bisphenol A oder Phenolnovolaken und Epichlorhydrin erhalten werden. Gegebenenfalls können auch andere Epoxidharze, z.B. auf Basis von Polyolen eingesetzt werden. Produkte dieser Art sind dem Fachmann bekannt und werden in der Literatur in grosser Zahl beschrieben. Bevorzugt werden für das erfindungsgemässe Verfahren Epoxidharze auf der Basis von Bisphenol A oder Phenolnovolaken mit einem Epoxidäquivalentgewicht von 180 bis 1000 eingesetzt.

Die Epoxidharze werden, vorzugsweise in Gegenwart eines aprotischen Lösungsmittels, mit einem primären Amin zu einem sekundäre Aminogruppen aufweisenden Epoxidharz-Amin-Addukt umgesetzt. Pro verfügbarer Epoxidgruppe des Epoxidharzes kommen dabei 0,6 bis 1,0 Mol primäre Aminogruppen zum Einsatz, wobei als Amine primäre Monoalkylamine, vorzugsweise solche, deren Alkylrest 4 und mehr Kohlenstoffatome aufweist oder primäre Alkylendiamine oder Diamine, welche neben der primären Aminogruppe noch eine tertiäre Aminogruppe, z.B. eine Dialkylaminogruppe aufweisen. Als bevorzugte Vertreter seien das n- bzw. Isobutylamin, Hexylamine, das 2-Ethylhexylamin, Ethylendiamin und seine Homologe sowie primär-tertiäre Diamine, wie Dimethylaminopropylamin, Diethylaminopropylamin und Homologe dieser Reihe genannt. Besonders bevorzugt werden Mischungen aus Alkylaminen bzw. Alkylendiaminen und Dialkylaminoalkylaminen eingesetzt. Die Umsetzung erfolgt bei 50 bis 90 °C.

Als aprotische Lösungsmittel, deren Anwesenheit für die Reaktionsführung in einzelnen Fällen wesentlich ist, werden aromatische Kohlenwasserstoffe, wie Toluol oder Xylol oder Glykoldiether, wie Diethylenglykoldimethylether eingesetzt. Die Menge des Lösungsmittels beträgt zwischen 10 und 50% bezogen auf das Epoxidharz-Amin-Addukt.

Das Epoxidharz-Amin-Addukt kann gegebenenfalls bis zu 40 Mol-%, bezogen auf die verfügbaren Epoxidgruppen, mit Carboxylverbindungen, wie gesättigten oder ungesättigten Fettsäuren, Carboxylgruppen aufweisenden Polyestern oder entsprechenden anderen Präpolymeren, z.B. auf Acrylatbasis, modifiziert sein. Als Fettsäuren werden bevorzugt Monocarbonsäuren mit 7 bis 20 C-Atomen synthetischer oder natürlicher Herkunft eingesetzt. Beispielsweise können Benzoesäure, Isooctan-, Isononansäure, α-verzweigte synthetische Monocarbonsäuren mit $C_8$-$C_{12}$-Alkylresten (KOCH-Säuren) oder Ölfettsäuren und Tallölfettsäuren verwendet werden. Andere Monocarboxylverbindungen zur Modifizierung der Epoxidharz-Amin-Addukte sind Halbester von Dicarbonsäuren mit Monoalkoholen mit mehr als 3 C-Atomen oder mit Oxazolidinen modifizierte Carbonsäuren. Die Herstellung der letzteren ist beispielsweise in der AT-PS 375 946 beschrieben. Die Oxazolidine dienen dabei als zusätzliche Formaldehydspender. Die Umsetzung mit den Carboxylgruppen tragenden Modifikatoren erfolgt zweckmässig vor der Umsetzung mit den Aminen bei 90 bis 120 °C.

In einer besonderen Ausführungsform werden als Carboxylverbindungen, welche neben der primären Aminoverbindung zum Einsatz kommen, besonders vorteilhaft Adduktverbindungen von Maleinsäureanhydrid an ungesättigte Öle und/oder ungesättigte Kohlenwasserstoffverbindungen, deren Anhydridgruppen unter Halbesterbildung mit Monohydroxylverbindungen geöffnet wurden, wobei die freien Carboxylgruppen gegebenenfalls teilweise mit Monoepoxidverbindungen umgesetzt werden, eingesetzt. Durch Modifikation kann die Filmoberfläche und die Flexibilität der Filme wesentlich verbessert werden.

Die zur Modifizierung des Epoxidharz-Amin-Adduktes geeigneten Carboxylverbindungen dieser Art werden in bekannter Weise durch Anlagerung von Maleinsäureanhydrid an ungesättigte Öle, z.B. Holzöl, Leinöl, dehydratisiertes Rizinusöl, Sojaöl, Sonnenblumenöl und ähnliche natürliche Öle erhalten. Ebenso können auch synthetisch hergestellte hydroxylfreie Ester der in den obengenannten Ölen enthaltenen Fettsäuren bzw. der Tallölfettsäuren mit Polyolen als Ausgangsmaterial herangezogen werden. Bevorzugt werden als Polyenverbindung ungesättigte niedermolekulare Kohlenwasserstoffpolymere oder -oligomere zur Umsetzung mit dem Maleinsäureanhydrid herangezogen. Beispiele für diese Verbindungsklasse sind die sogenannten Polybutandien-Öle, das sind flüssige Oligomere des Butadiens mit verschiedener stereospezifischer Struktur oder die entsprechenden Pentadiene oder Cyclopentadiene. Diese Verbindungen weisen üblicherweise Molekulargewichte zwischen 400 und 3000 auf. Selbstverständlich können auch Mischungen dieser Ausgangsstoffe zur Adduktbildung mit dem Maleinsäureanhydrid herangezogen werden.

Die Menge des Maleinsäureanhydrids wird so gewählt, dass die Carboxylverbindung eine Säurezahl von 30 - 130 mg KOH/g, vorzugsweise 35 - 80 mg KOH/g aufweist.

Zur Halbesterbildung werden die Maleinsäureanhydrid-Addukte mit Monohydroxylverbindungen in bekannter Weise bei 50 bis 150°C umgesetzt. Als Monohydroxylverbindungen kommen dabei gesättigte oder ungesättigte Monoalkohole mit 1 bis 18 C-Atomen, wie Methanol und seine Homologe, Fettalkohole, Allylalkohol u.ä. zum Einsatz. Ebenso können als Monohydroxylverbindungen auch Glykolmonoester der (Meth)acrylsäure, wie Hydroxyethyl-(meth)acrylat, Hydroxypropyl(meth)acrylat sowie die weiteren homologen und isomeren Verbindungen eingesetzt werden. Bei den ungesättigten Monohydroxylverbindungen wird vorteilhafterweise die Umsetzung in Gegenwart von Inhibitoren, wie Hydrochinon, durchgeführt.

Eine Möglichkeit zur Verminderung der Anzahl der Carboxylgruppen dieser Halbester besteht in der Reaktion dieser Gruppen mit Monoepoxidverbindungen, wie Estern von epoxidierten Fettsäuren oder Glycidylestern oder -ethern. Gut geeignet für diesen Zweck sind beispielsweise die Glycidylester der KOCH-Säuren, insbesondere solche, welche am tertiären Kohlenstoffatom mindestens einen Fettsäurerest mit mehr als 8 C-Atomen aufweisen.

Die Umsetzung dieser Gruppe der Carboxylverbindungen mit den Epoxidgruppen des Epoxidharzes erfolgt bei 90 bis 150°C. Vorteilhafterweise wird die Reaktion bis zur vollständigen Bindung der modifizierenden Komponente geführt.

Als weitere Modifikatoren können auch sekundäre Amine, insbesondere sekundäre Alkylamine eingesetzt werden. Durch die dabei resultierenden tertiären Aminogruppen kann die Löslichkeit der Produkte beeinflusst werden.

Die zum Epoxid-Amin-Addukt führende Reaktionsstufe wird bis zu einem Epoxidwert von praktisch 0 geführt, d.h., dass die erhaltenen Epoxid-Amin-Addukte frei von Epoxidgruppen sind.

Das resultierende gegebenenfalls mit Carboxylverbindungen modifizierte Epoxidharz-Amin-Addukt wird in der nächsten Reaktionsstufe mit Formaldehyd oder einer unter den Reaktionsbedingungen Formaldehyd abspaltenden Verbindung und einem ein- oder mehrwertigen Phenol und/oder Alkylphenol und/oder einem Aminoalkylierungsprodukt von monosubstituierten ein- oder zweiwertigen Phenolen oder gegebenenfalls anteilig mit einer formaldehydreaktiven Verbindung vom Typ des Harnstoffs, des Melamins oder des Guanamins umgesetzt. Dabei werden pro Mol NH-Gruppen im Epoxidharz-Amin-Addukt 0,5 bis 1 Mol Phenol und pro formaldehydreaktiver Stelle 0,25 bis 0,9 Mol Formaldehyd eingesetzt. Die Reaktion erfolgt bei 50 bis 90°C und wird bis zu einer möglichst weitgehenden Bindung des eingesetzten Formaldehyds geführt.

Als Phenolkomponente wird das Phenol in seinen handelsüblichen Lieferformen, z.B. liquefactum (90%), Alkylphenole, wie die Methyl-, Butyl- oder höhere Alkylphenole, wie Nonylphenol oder Diphenole der Formel Ph - R - Ph, wobei R einen geradkettigen oder verzweigten Alkylenrest mit 1 bis 5 C-Atomen darstellt, vorzugsweise das Bisphenol A, eingesetzt. Die eingesetzten Phenole müssen zur Erzielung der gewünschten Eigenschaften mindestens 2 formaldehydreaktive Stellen aufweisen.

In einer Verfahrensvariante, durch welche die für eine ausreichende Wasserverdünnbarkeit notwendige Säuremenge vermindert werden kann, werden die obengenannten Phenole ganz oder teilweise durch Aminoalkylierungsprodukte von monosubstituierten ein- oder zweikernigen Phenolen ersetzt, wobei der Substituent ein Alkylrest mit mindestens 4 C-Atomen oder ein Aralkylrest ist und das Amin mindestens 2 Amino-wasserstoffe und mindestens 4 C-Atome aufweist.

Abgesehen von der verbesserten Löslichkeit werden durch diese Strukturen zusätzliche flexibilisierende und verlaufördernde Gruppen in das Bindemittelmolekül eingebaut, wodurch die Verwendung hochsiedender Lösungsmittel in den Lackformulierungen weitgehend überflüssig wird.

Die für diese Verfahrensvariante eingesetzten Aminoalkylierungsprodukte werden im Sinne einer MANNICH-Reaktion aus Phenolen, Aminen und Formaldehyd hergestellt. Zum Unterschied von den kathodisch abscheidbaren Bindemitteln auf Basis von MANNICH-Basen, wie sie im Stand der Technik zitiert sind, stellt die MANNICH-Reaktion im vorliegenden Fall nur eine zusätzliche Modifizierung der Phenolkomponente dar. Durch den bevorzugten Einsatz primärer bzw. höhermolekularer Amine wird durch diese Modifizierung die Menge der beim Einbrennen entstehenden Spaltprodukte nur unwesentlich erhöht.

Für die Herstellung der erfindungsgemäss eingesetzten Zwischenprodukte werden als monosubstituierte einkernige Phenole vor allem Alkylphenole eingesetzt, deren Alkylrest mindestens 4 Kohlenstoffatome aufweist. Vertreter dieser Gruppe sind die Butylphenole und deren höhere Homologe, vorzugsweise die mit 8 und mehr Kohlenstoffatomen im Substituenten, wie p-Isooctylphenol oder p-Nonylphenol. Als Substituenten können auch Alkylreste vorkommen, wie dies beim Benzylphenol oder beim Cumylphenol der Fall ist. Aus der Gruppe der zweikernigen Phenole sind beispielsweise die Bis-hydroxyarylalkane, wie das Bis-(4-hydroxylphenyl)methan oder, vorzugsweise, das 2,2-Bis-(4-hydroxyphenyl)propan (Bisphenol A) zu nennen.

Als Amine werden für diese Zwischenprodukte Verbindungen eingesetzt, die pro Molekül mindestens zwei Aminowasserstoffe und mindestens 4 Kohlenstoffatome aufweisen. Zu diesen Verbindungen zählen primäre (Alkanol)amine, wie die Butylamine, deren höhere Homologe z.B. das Ethylhexylamin, die entsprechenden Alkanolamine, die entsprechenden primären Diamine, wie das Hexamethylendiamin oder primär-tertiäre Diamine, z.B. das N,N-Diethylaminopropylamin. Geeignete Amine können auch durch Umsetzung von primären Diaminen (1 Mol) mit Acrylestern oder Monoepoxidverbindungen (2 Mol) erhalten werden. Als besonders geeignete Beispiele seien dafür Reaktionsprodukte des Hexamethylendiamins mit Butylacrylat und 2-Ethylhexylacrylat bzw. mit Glycidylestern von KOCH-Säuren genannt.

Die Herstellung der für das erfindungsgemässe Verfahren geeigneten Zwischenprodukte erfolgt in der Weise, dass die Amine zusammen mit den Phenolen auf 70 bis 80°C erwärmt werden. Nach Zugabe des Formaldehyds, vorzugsweise in Form von Paraformaldehyd, erfolgt die Umsetzung bei 80 bis 130°C, wobei das Reaktionswasser mit Hilfe eines Schleppmittels entfernt wird. Je nach Art der Reaktanten kann bei der Zugabe des Formaldehyds eine mehr oder weniger starke exotherme Reaktion auftreten. Die Reaktion ist beendet, wenn pro Mol Phenol 1 Mol Reaktionswasser abgetrennt wurde.

Produkte mit weitgehend gleichen Eigenschaften, werden bei einer Verfahrensvariante erhalten, wobei die Aminoalkylierung der Phenole in Gegenwart des Epoxidharz-Amin-Adduktes durchgeführt wird. Diese Variante gestattet die Herstellung der erfindungsgemässen Produkte in einem «Eintopfverfahren». Nach Herstellung des Epoxidharz-Amin-Adduktes wird das für die Aminoalkylierung vorgesehene Amin, Phenol und der Formaldehyd zugegeben und 1 bis 3 Stunden bei 70 bis 90°C kondensiert. Das dabei entstehende Reaktionswasser verbleibt im Ansatz. Nach dieser Reaktionszeit werden die vorgesehenen Phenol- und Formaldehydmengen zugesetzt und die Reaktion bei 55 bis 80°C bis zu einem Formaldehydgehalt von weniger als 0,5% geführt (Verfahrensvariante B).

In einer weiteren Verfahrensvariante (C) ist es auch möglich, beide Reaktionsstufen zu verbinden. Dabei wird das Epoxidharz-Amin-Addukt gemeinsam mit der Aminkomponente mit dem gesamten vorgesehenen Phenol und der gesamten Formaldehydmenge versetzt und die Reaktionen bei 60 bis 75°C durchgeführt, bis die entsprechende Bindung des eingesetzten Formaldehyds erfolgt ist.

Gegebenenfalls kann das gemäss Hauptanspruch eingesetzte ein- oder mehrwertige Phenol und/oder Alkylphenol teilweise durch anderen formaldehydreaktive Verbindungen ersetzt werden. So wurde gefunden, dass die Phenole teilweise durch Aminoverbindungen vom Typ des Harnstoffs, Thioharnstoffs, Melamins oder der Guanamine ersetzt werden können, wodurch eine weitere Verbesserung der Löslichkeitscharakteristik erzielt wird.

Diese Variante ist dadurch gekennzeichnet, dass man 0,1 bis 0,4 Mol der eingesetzten Phenolverbindung durch formaldehydreaktive Aminoverbindungen vom Typ des Harnstoffs, Thioharnstoffs, Imidoharnstoffs, Melamins, Acetoguanamins oder Benzoguanamins oder Mischungen dieser Verbindungen ersetzt und in einer gemeinsamen Reaktionsstufe mit der sekundären Aminogruppen aufweisenden Aminoverbindung und dem Formaldehyd umsetzt.

Durch diese Massnahme wird neben einer Verbesserung der Löslichkeitscharakteristik auch die Haftfestigkeit des abgeschiedenen Films sowohl auf dem beschichteten Substrat als auch gegenüber der Folgeschicht verbessert.

Die Gruppe der formaldehydreaktiven Aminoverbindungen im Sinne der vorliegenden Anmeldung umfasst insbesondere Verbindungen vom Typ des Harnstoffs, Thioharnstoffs, Iminoharnstoffs, Melamins, Aceto- bzw. Benzoguanamins oder Mischungen dieser Verbindungen. Der Ersatz der Phenolverbindungen durch die genannten Aminoverbindungen erfolgt in einem Ausmass, welches 0,1 bis 0,4 Mol des eingesetzten Phenols umfasst.

Der Formaldehyd wird vorzugsweise als Paraformaldehyd in einer der handelsüblichen Formen mit einem effektiven Formaldehydgehalt von 80 bis 100% eingesetzt. Als Formaldehydspender können zusätzlich auch Verbindungen verwendet werden, welche unter den Verfahrensbedingungen Formaldehyd abgeben. Solche Verbindungen sind beispielsweise Oxazolidinverbindungen, welche z.B. in Form ihrer Carboxylderivate oder als Amine zur Modifikation des Epoxidharzes herangezogen werden. Der Formaldehyd wird in einer molaren Menge entsprechend 25 bis 90, vorzugsweise 30 bis 80 Mol-%, bzw. in der besonders bevorzugten Ausführungsform in einer Menge von 60 bis 80 Mol-%, bezogen auf die formaldehydreaktiven Stellen der Phenolkomponente eingesetzt. Zur Erzielung einer selbstvernetzenden Struktur ist es vorteilhaft, dass mindestens ein 30%iger molarer Überschuss an Formaldehyd gegenüber den vorhandenen NH-Gruppen zum Einsatz gelangt.

Als ungesättigte Verbindungen, welche als Kombinationspartner für die Basisharze gemäss Komponente (A) eingesetzt werden können, sind für das erfindungsgemässe Verfahren folgende Verbindungsklassen geeignet:

(1) Trocknende Öle mit einer Jodzahl von mehr als 120, wie Holzöl, Oiticicaöl, Leinöl, dehydratisiertes Rizinusöl, sowie synthetischer Ester der in diesen Ölen enthaltenen Fettsäuren oder von Tallölfettsäuren wie Polyolen. Gegebenenfalls können die Öle oder Ester auch in einer vorpolymerisierten Form (Standöle) eingesetzt werden.

(2) Anlagerungsprodukte von Maleinsäure(anhydrid) an die hydroxylfreien Ester der oben genannten Gruppe (1) oder an ungesättigte Kohlenwasserstoffoligomere, -polymere oder -copolymere mit einem Molekulargewicht von 400 bis 3000, deren Carboxyl- oder Anhydridgruppen praktisch vollständig in Ester-Amid- oder Imidgruppen übergeführt wurden. Als ungesättigte Kohlenwasserstoffverbindungen kommen vorzugsweise die flüssigen Oligomere des Butandiens mit verschiedener stereospezifischer Struktur oder die entsprechenden Pentadiene oder Cyclopentadiene zum Einsatz. Die Veresterung erfolgt bei Vorliegen der Anhydridstruktur in erster Stufe vorzugsweise durch Halbesterbildung mit Monoalkoholen oder Glykolmonoethern. Die Carboxylgruppen werden in bekannter Weise durch Umsetzung mit Monoepoxidverbindungen verestert. Eine bevorzugte Gruppe von Monoepoxidverbindungen zur Veresterung der Carboxylgruppen der Additionsverbindungen sind die Glycidylester von $C_9$-$C_{11}$-Fettsäuren mit tertiären Carboxylgruppen (KOCH-Säuren).

(3) Eine weitere Gruppe ungesättigter Verbindungen sind Verbindungen, welche mindestens zwei Acryldoppelbindungen aufweisen. Solche Verbindungen liegen in den Estern der (Meth)acrylsäure mit Alkandiolen, vorzugsweise solchen mit 4 und mehr C-Atomen, Polyalkylenglykolen oder Diepoxidharzen, sowie mit Polyolen wie Trimethylolpropan oder Pentaerythrit vor. In Hydroxylverbindungen oder Hydroxylgruppen tragende Polyester können diese Gruppen durch Umsetzung mit ungesättigten Monoisocyanaten, wie den handelsüblichen Isocyanatoalkyl(meth)acrylaten oder Umsetzungsprodukten aus äquimolaren Mengen von Diisocyanaten und Hydroxyl(meth)acrylaten erhalten werden. Ungesättigte Verbindungen dieser Art stellen auch die Polyallylether von Polyolen, wie Trimethylolpropandiallylether dar.

Selbstverständlich können auch Mischungen verschiedener Typen von ungesättigten Verbindungen eingesetzt werden.

Wesentliche Voraussetzung für die Einsetzbarkeit solcher ungesättigter Verbindungen als Kombinationspartner im Sinne der vorliegenden Erfindung ist einerseits ihre praktische Unlöslichkeit in Wasser unter den Verfahrensbedingungen der K-ETL (kathodische Elektrotauchlackierung). Dies gilt auch für Produkte, welche in irgendeiner Form basische Gruppierungen aufweisen. Andererseits müssen die Kombinationspartner mit dem jeweils verwendeten Basisharz verträglich sein, d.h. die Kombinationen müssen — als Klarlack aufgebracht und eingebrannt — weitgehend trübungsfreie Filme ergeben.

Die Verträglichkeit von Kombinationspartnern kann in vielen Fällen dadurch erzielt werden, dass man die wasserunlösliche ungesättigte Verbindung mit dem Basisharz partiell umsetzt. Dies kann beispielsweise bei den Additionsprodukten der Gruppe (2) dadurch erfolgen, dass man einen Addukthalbester als Carboxylverbindung, wie dies bei der Komponente (A) erfolgt, in ein «Basisharz» einbaut und das so erhaltene Produkt als Kombinationspartner verwendet.

Zur Herstellung eines ETL-Bades werden 95 bis 50 Gew.-%, bezogen auf Festharz, der Komponente (A), mit 5 bis 50 Gew.-%, bezogen auf Festharz, einer Komponente (B), gegebenenfalls unter leichtem Erwärmen, homogen vermischt. Vorzugsweise enthalten die Kombinationen 10 bis 30 Gew.-% der Komponente (B). Gegebenenfalls kann die Viskosität der Partner oder der Mischung durch zusätzliche Anteile an organischen Hilfslösungsmitteln, z.B. Glykolethern, noch gesenkt werden.

Die Mischung der Harze wird dann gemeinsam durch anorganische und/oder organische Säuren, vorzugsweise Ameisensäure, Essigsäure oder Milchsäure partiell neutralisiert und damit in eine wasserverdünnbare Form übergeführt. Zur Erzielung stabiler ETL-Bäder ist ein Neutralisationsgrad von 10 bis 40%, entsprechend einer Neutralisationsmittelmenge von ca. 20 bis 60 Millimol Säure pro 100 g Basisharz (Fettstoff) üblicherweise ausreichend.

Die Bindemittel werden dann mit deionisiertem Wasser auf die gewünschte Konzentration verdünnt; gegebenenfalls werden sie vor der Neutralisation oder im teilverdünnten Zustand mit Pigmenten, Füllstoffen und anderen Zusatzstoffen, vorzugsweise in Form von Pigmentpasten, zu pigmentierten Lacken verarbeitet.

Gegebenenfalls können die eingesetzten nicht wasserverdünnbaren Hilfslösungsmittel während oder nach dem (teilweisen) Verdünnen mit Wasser unter Anwendung von Vakuum bei 30 bis 80°C teilweise entfernt werden. Auf diese Weise können Produkte erhalten werden, die nur mehr geringe Lösungsmittelanteile aufweisen, wie sie in einzelnen Ländern vom Gesetzgeber gefordert werden (z.B. VOC-Regelung in den USA).

Die Formulierung der Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als Grundierung bei Temperaturen zwischen 150 und 200°C, während 10 bis 30 Minuten. Für den unteren Temperaturbereich ist ein Zusatz von Cobalt- oder Mangansalzen, wie sie als Sikkative Verwendung finden, vorteilhaft.

Sofern die Bindemittel nicht in ausreichendem Masse selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen, Walzen, oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Alle Angaben in Teilen oder Prozenten beziehen sich, sofern nichts anderes angegeben, auf Gewichtseinheiten.

Die folgenden Abkürzungen werden in den Beispielen benützt:

ACS      Acrylsäure

AGE      Allylglycidylether

B 180    flüssiges Polybutadienöl (ca. 75% 1,4-cis-, ca. 24% 1,4-trans- und ca. 1% Vinyl-Doppelbindungen; Molekulargewicht ca. 1500 ± 15%, Jodzahl ca. 450 g/100 g)

BPA     Bisphenol A
BUT     n-Butanol
CE      Monoglycidylester einer $C_9$-$C_{11}$-KOCH-Säure
DEAPA   N,N-Diethylaminopropylamin
DGME    Diethylenglykoldimethylether
EGL     Ethylenglykolmonoethylether
DPME    Dipropylenglykolmonomethylether
PME     Propylenglykolmonomethylether
EHA     2-Ethylhexylamin
EHX     Ethylhexanol
EPH I    Diepoxidharz auf Basis von Bisphenol A, Epoxidäquivalentgewicht ca. 190
HQ      Hydrochinon
HMDA    Hexamethylendiamin
HPA     Hydroxypropylacrylat
MSA     Maleinsäureanhydrid
NPH     Nonylphenol
PF 91    Paraformaldehyd, 91%ig
PH      Phenol, liquefactum, 91%
TDI     Toluylendiisocyanat (handelsübliches Isomerengemisch)
TEA     Triethylamin

(I)   Als Basisharze (Komponente A) werden in den Beispielen folgende Produkte eingesetzt:

*BH I:*

In einem mit Thermometer, Rührer und Rückflusskühler ausgestatteten Reaktionsgefäss werden 190 Teile EPH I (1 Val) in 132 Teilen Toluol gelöst und auf 60°C erwärmt. Anschliessend wird eine Mischung von 59 Teilen DEAPA (0,45 Mol) und 59 Teilen EHA (0,45 Mol) langsam zugegeben, wobei die Reaktionstemperatur, gegebenenfalls unter Kühlung des Ansatzes, auf 75 bis 80°C gehalten wird. Die Temperatur wird so lange gehalten, bis der Epoxidwert auf einen Wert von praktisch Null gesunken ist. Die Adduktlösung kann unmittelbar weiterverarbeitet werden. Das Addukt enthält, bezogen auf Festharz, 0,8 Mol NH-Gruppen.

439 Teile des so hergestellten Addukts (0,8 Mol NH) werden auf 60°C erwärmt und nach Zugabe von 182 Teilen BPA (0,8 Mol) und 75,8 Teilen PF 91 (2,3 Mol $CH_2O$) auf 80°C erwärmt. Die Reaktionstemperatur wird unter Rühren bis zum Erreichen eines Formaldehydwertes von weniger als 0,3% (bezogen auf eingesetzten Formaldehyd) gehalten. Das Reaktionsprodukt weist eine Aminzahl von 135 mg KOH/g auf.

*BH II:*

In gleicher Weise wie bei BH I wird eine Lösung von 760 Teilen EPH I (4 Val) in 362 Teilen Toluol mit 260 Teilen DEAPA (2 Mol) und 114 Teilen HMDA (2 Mol) umgesetzt. Das Produkt enthält 4,0 Mol NH-Gruppen in 1134 g Festharz.

1460 Teile dieser Adduktlösung (= 1134 Teile Festharz, enthaltend 4,0 Mol NH-Gruppen) werden, wie bei BH I angegeben, mit 346 Teilen PH (= 315 Teile Phenol, 100% = 3,5 Mol bzw. 0,88 Mol Phenol/NH) und 231 Teilen PF 91 (= 210 Teile $CH_2O$, 100% = 7 Mol) bei 60°C umgesetzt. Das Reaktionsprodukt weist eine Aminzahl von 203 mg KOH/g auf.

*BH III:*

Aus 700 Teilen B 180 und 100 Teilen MSA wird in Gegenwart von 0,05 Teilen Diphenylparaphenylendiamin (Inhibitor) bei 200°C ein Addukt hergestellt, bei welchem das eingesetzte MSA praktisch vollständig gebunden ist. Nach Kühlen auf 100°C werden 130 Teile EHX zugesetzt und bei 120°C bis zum Erreichen der theoretischen Säurezahl verestert (MAD A).

110 Teile MAD A (entsprechend ca. 0,12 COOH-Gruppen) werden mit 212 Teilen EPH I in 80%iger Lösung in DGME bei 120°C bis zu einer Säurezahl von praktisch 0 umgesetzt.

Nach Zusatz von 108 Teilen DGME, 59 Teilen DEAPA (0,45 Mol) und 59 Teilen EHA (0,45 Mol) wird der Ansatz bei 65 bis 70°C bis zu einem Epoxidwert von praktisch 0 reagiert. Nach Erreichen dieses Wertes werden 114 Teile BPA (0,5 Mol) und 50 Teile PF 91 (1,5 Mol) zugegeben und die Reaktion bei 60°C bis zum Erreichen eines Gehaltes an freiem Formaldehyd von 0,5 bis 1% geführt. Der Ansatz wird dann mit 130 Teilen DGME verdünnt.

*BH IV:*

Analog wie bei BH III werden 199 Teile MAD A (entsprechend ca. 0,21 COOH-Gruppen) mit 1102 Teilen EPH I in 80%iger Lösung in DGME bei 120°C bis zu einer Säurezahl von praktisch 0 umgesetzt. Nach Zusatz von 473 Teilen DGME, 116 Teilen HMDA und 442 Teilen DEAPA wird der Ansatz bei 65 bis 70°C bis zu einem Epoxidwert von praktisch 0 reagiert. Nach Zugabe von 704 Teilen NPH, 251 Teilen PBA, 268 Teilen PF 91 (= 244 Teile $CH_2O$, 100%) und 490 Teilen DGME wird die Reaktion bei 60 bis 65°C so lange weitergeführt, bis der Gehalt an freiem Formaldehyd auf 0,5 bis 1% gesunken ist.

*BH V:*

In einem mit Thermometer, Rührer und Rückflusskühler ausgestatteten Reaktionsgefäss werden 628 Teile des gemäss BH III hergestellten polybutadienmodifizierten Epoxidharz-Amin-Adduktes (entsprechend 0,8 Mol NH-Gruppen) bei 60°C mit 114 Teilen BPA (0,5 Mol), 149 Teilen MVP (siehe unten, 80%ig, 0,2 Mol) und 76 Teilen PF 91 (2,3 Mol) umgesetzt, bis der Gehalt an freiem Formaldehyd auf 0,5 bis 1% (bezogen auf eingesetzten Formaldehyd) gefallen ist. Der Ansatz wird mit 170 Teilen PME verdünnt und mit 35 mMol Ameisensäure pro 100 g Festharz neutralisiert. Nach einer Homogenisierungszeit von etwa 1 Stunde werden 975 Teile deionisiertes Wasser unter kräftigem Rühren langsam zugegeben. Die entstehende Dispersion hat einen Festkörpergehalt von ca. 35%.

*Herstellung des aminoalkylierten Nonylphenols (MVP)*

In einem mit Wasserabscheider, Kühler, Thermometer und Rühreinrichtung ausgestatteten Reaktionsgefäss werden 130 Teile DEAPA und 440 Teile NPH auf 70°C erwärmt und 66 Teile PF 91 portionsweise zugesetzt, wobei die Temperatur durch die auftretende Exothermie nicht über 80°C ansteigen soll. Die Abtrennung des gebildeten Reaktionswassers erfolgt mit Hilfe eines Schleppmittels mit einem Siedebereich von 80 bis 130°C (z.B. einem entsprechenden Spezialbenzin). Die Reaktion wird so lange geführt, bis die entsprechende Menge Reaktionswasser abgeschieden wurde. Nach Abziehen des Schleppmittels im Vakuum wird das Produkt mit DEGM auf einen Festkörpergehalt von 80% verdünnt.

*BH VI:*

In einem mit Thermometer, Rührer und Rückflusskühler ausgestatteten Reaktionsgefäss werden 1064 Teile (5,6 Val) EPH I in 694 Teilen DPME gelöst und bei 65 bis 70°C mit 116 Teilen HMDA (1 Mol), 364 Teilen DEAPA (2,8 Mol) und 103 Teilen EHA (0,8 Mol) bis zu einem Epoxidwert von 0 umgesetzt. Das Addukt enthält 5,6 Mol sekundäre NH-Gruppen.

Nach Zugabe von weiteren 180 Teilen DPME werden 550 Teile NPH (2,5 Mol), 84 Teile einer 50%igen wässrigen Harnstofflösung (entsprechend 0,7 Mol Harnstoff), 251 Teile BPA (1,1 Mol) und 254 Teile PF 91 (7,7 Mol) zugegeben und der Ansatz bei 60°C gerührt, bis der Gehalt an freiem Formaldehyd (bezogen auf eingesetzten Formaldehyd) unter 1% liegt.

Zur Herstellung einer Dispersion wird der Ansatz mit 272 Teilen (entsprechend 30 mMol/100 g Festharz) einer 3-n-Ameisensäure versetzt und mit deionisiertem Wasser langsam auf einen Festkörpergehalt von 40% verdünnt.

*BH VII:*

In der oben beschriebenen Apparatur werden 760 Teile EPH I (4,0 Val) in 490 Teilen DPME gelöst und mit 116 Teilen HMDA (1 Mol) und 260 Teilen DEAPA (2 Mol) bei 65 bis 70°C bis zu einem Epoxidwert von 0 reagiert. Das Addukt enthält 4 Mol sekundäre Aminogruppen.

Nach Zugabe von weiteren 350 Teilen DPME wird der Ansatz mit 594 Teilen NPH (2,7 Mol) und 63 Teilen Melamin (0,5 Mol) versetzt und bei 55 bis 60°C gerührt, bis der Gehalt an freiem Formaldehyd (bezogen auf eingesetzten Formaldehyd) auf unter 1% gefallen ist. Nach Zugabe von 161 Teilen (entsprechend 25 mMol/100 g Festharz) einer 3-n-Ameisensäure wird in der im Beispiel 1 angegebenen Weise eine 35%ige Dispersion hergestellt.

Als Komponente (B) werden in den Beispielen folgende Produkte eingesetzt:

*B 1:*

700 Teile B 180 werden in bekannter Weise in Gegenwart von 0,05 Teilen Diphenylparaphenylendiamin (Inhibitor) bei 200°C mit 100 Teilen MSA so lange reagiert, bis das MSA vollständig gebunden ist. Nach Kühlen auf 100°C werden 74 Teile BUT zugesetzt und bei 120°C bis zum Erreichen der theoretischen Säurezahl des Halbesters verestert (MAD B).

874 Teile MAD B werden bei 120°C mit 250 Teilen CE bis zu einer Säurezahl unter 3 mg KOH/g umgesetzt.

*B 2:* Lackleinöl

*B 3:* Holzöl

*B 4:* Trimethylolpropantriacrylat

*B 5:*

Epoxyacrylat, hergestellt durch Umsetzung bei 110°C von 190 Teilen EPH I mit 65 Teilen ACS in Gegenwart von 0,2 Teilen TEA als Katalysator und 3 Teilen HQ als Inhibitor bis zu einer Säurezahl von weniger als 4 mg KOH/g. Das Reaktionsprodukt wird mit 45 Teilen EGL angelöst (Festkörpergehalt 85%).

*B 6:*

Aus 174 Teilen TDI und 130 Teilen HPA wird in bekannter Weise ein ungesättigtes Monoisocyanat hergestellt 608 Teile dieses Produktes werden nach Zugabe von 5 Teilen HQ und 407 Teilen DGME bei 75 bis 80°C mit 118 Teilen TMP umgesetzt, bis der Gehalt an freien Isocyanatgruppen unter 0,1% gefallen ist.

*B 7:* TMP-Diallylether

*B 8:*

73 Teile n-Butylamin werden mit 228 Teilen AGE bei 80 bis 90°C bis zu einem Epoxidwert von praktisch 0 umgesetzt. Das Produkt wird mit 75 Teilen EGL angelöst (Festkörpergehalt 75%).

*Erfindungsgemässe Beispiele 1 bis 11:*

Gemäss den in der Tabelle 1 angegebenen Mengenverhältnissen (Gewichtsteile) werden die Basisharze (BH I bis BH VII) und die Kombinationspartner B 1 bis B8 bei 50 bis 70°C eine Stunde homogenisiert. Anschliessend wird die angegebene Menge Ameisensäure zugesetzt und der Ansatz durch portionsweise Zugabe von deionisiertem Wasser auf den angegebenen Festkörpergehalt verdünnt.

TABELLE 1

| Beispiel | Basisharz (100%ig) | Kombinationspartner (100%ig) | mMol/Säure/100 g Festharz | % Festkörper der Dispersion |
|---|---|---|---|---|
| 1 | 85 BH I | 15 B 6 | 50 | 36 |
| 2 | 90 BH I | 10 B 3 | 50 | 38 |
| 3 | 80 BH II | 10 B 2 | 35 | 35 |
|  |  | 10 B 4 |  |  |
| 4 | 75 BH III | 25 B 5 | 35 | 40 |
| 5 | 85 BH III | 15 B 7 | 35 | 38 |
| 6 | 70 BH III | 30 B 1 | 40 | 36 |
|  |  | 10 B 4 |  |  |
| 7 | 90 BH IV | 10 B 8 | 30 | 40 |
| 8 | 85 BH IV | 15 B 5 | 35 | 36 |
| 9 | 80 BH V | 20 B 5 | 35 | 38 |
| 10 | 90 BH VI | 10 B 3 | 30 | 35 |
| 11 | 85 BH VII | 15 B 7 | 30 | 36 |

In der Tabelle 2 sind die Ergebnisse der Prüfung von Lacken auf Basis der Beispiele 1 bis 11 im Vergleich zu entsprechenden Lacken, bei denen nur die Komponente (A) (ohne Kombinationspartner) als Bindemittel verwendet wird, zusammengefasst. Die Spalte (A) zeigt die Ergebnisse mit den nichtmodifizierten Bindemitteln (nur Komponente A), die Spalte (B) die durch die erfindungsgemässen Kombinationen erreichten Werte.

Die Prüfung erfolgte durch Abscheidung nach dem K-ETL-Verfahren auf entfettetem Stahlblech mit Lacken folgender Zusammernsetzung (alle Angaben auf Feststoff):

75   Teile Harzkombination aus Beispiel 1 bis 11 (bwz. Basisharz für Vergleich)

58   Teile Farbpaste (1) (Anreibeharz fest + Pigment)

0,075 Teile Co-Metall (als Naphthenat)

(1) Die Farbpaste setzt sich aus 100 Teilen Festharz Anreibeharz gemäss EP-A3-0 076 955 (siehe unten), 0,8 Teilen Farbruss, 10 Teilen basisches Bleisilikat und 122,5 Teilen Titandioxid zusammen.

Die Herstellung des Anreibeharzes erfolgt in folgender Weise: 500 Teile eines Epoxidharzes auf Basis von Bisphenol A (Epoxidäquivalentgewicht ca. 500) werden in 214 Teilen PME gelöst und bei 110°C mit 83 Teilen eines Halbesters aus Phthalsäureanhydrid und EHX in Gegenwart von 0,5 g Triethylamin als Katalysator bis zu einer Säurezahl von weniger als 3 mg KOH/g reagiert. Dann werden 120 Teile eines NH-funktionellen Oxazolidins aus Aminoethylethanolamin, 2-Ethylhexylacrylat und Formaldehyd, sowie 26 Teile DEAPA zugefügt und der Ansatz bei 80°C bis zu einem Epoxidwert von praktisch 0 reagiert. Der Ansatz wird mit 200 Teilen Propylenglykolmonomethylether verdünnt und mit 97 Teilen 3normaler Ameisensäure partiell neutralisiert. Der resultierende Festkörpergehalt beträgt 58,8.

Die Lacke wurden nach Verdünnung auf einen Festkörpergehalt von 18% unter Bedingungen, welche eine Trockenfilmstärke von $20 \pm 2$ µm ergeben auf zinkphosphatiertes Stahlblech kathodisch abgeschieden und bei den angegebenen Einbrenntemperaturen eingebrannt.

TABELLE 2

| Bei-spiel | Einbrenn-temp. °C* | | Filmqualität ** | | Tiefung nach ERICHSEN (mm) | |
|---|---|---|---|---|---|---|
| | A | B | A | B | A | B |
| 1 | 160 | 150 | 3 | 1-2 | 2.1 | 4.7 |
| 2 | 160 | 160 | 3 | 1 | 2.1 | 6.8 |
| 3 | 140 | 140 | 2 | 1 | 3.3 | 5.5 |
| 4 | 160 | 150 | 2 | 1 | 4.1 | 7.3 |
| 5 | 160 | 160 | 2 | 1 | 3.1 | 4.5 |
| 6 | 160 | 160 | 2 | 1 | 4.1 | 8.0 |
| 7 | 160 | 160 | 2 | 1 | 3.2 | 5.7 |

TABELLE 2 (Fortsetzung)

| Bei-spiel | Einbrenn-temp. °C* | | Filmqualität ** | | Tiefung nach ERICHSEN (mm) | |
|---|---|---|---|---|---|---|
| | A | B | A | B | A | B |
| 8 | 160 | 150 | 2 | 1 | 3.2 | 7.1 |
| 9 | 160 | 150 | 2 | 1 | 4.3 | 7.8 |
| 10 | 160 | 150 | 2 | 1 | 2.6 | 5.2 |
| 11 | 160 | 150 | 3 | 1 | 2.3 | 6.1 |

\*   Die Einbrenntemperatur wurde jeweils so gewählt, dass die Beschichtungen beim Salzsprühtest nach ASTM B-117-64 nach einer Prüfdauer von 700 Stunden einen Angriff am Kreuzschnitt von weniger als 2 mm aufweisen.

\*\*   Beurteilung 1 völlig glatte Oberfläche
              2 wellige Oberfläche
              leicht rauhe Oberfläche

**Patentansprüche**

1. Verfahren zur Herstellung von kathodisch abscheidbaren Elektrotauchlack-Bindemitteln auf der Basis von modifizierten Epoxidharzen, dadurch gekennzeichnet, dass man

(A)
95 bis 50 Gew.-%, vorzugsweise 90 bis 70 Gew.-% (bezogen auf Feststoff) eines Umsetzungsproduktes, welches aus einem Epoxidharz mit mindestens 2 Epoxidgruppen und einem Epoxidäquivalentgewicht von 180 bis 1000 durch Reaktion mit

0,6 bis 1,0 Mol primäre Aminogruppen pro verfügbarer Epoxidgruppe, eines primären Monoalkylamins und/oder eines primären Alkylendiamins und/oder eines primär-tertiären Alkylendiamins und

0 bis 0,4 Mol pro verfügbarer Epoxidgruppe einer Carboxylverbindung oder eines sekundären Amins bei 50 bis 120°C bis zu einem Epoxidwert von praktisch Null und weiterer Umsetzung des resultierenden Epoxidharz-Amin-Adduktes mit, bezogen auf 1 Mol NH-Gruppen,

0,5 bis 1 Mol eines ein- oder mehrkernigen Phenols und/oder Alkylphenols und/oder eines Aminoalkylierungsproduktes von monosubstituierten ein- oder zweikernigen Phenolen oder gegebenenfalls anteilig einer formaldehydreaktiven Verbindung vom Typ des Harnstoffs, des Melamins oder des Guanamins und mit

0,25 bis 0,9, vorzugsweise 0,6 bis 0,8 Mol Formaldehyd pro formaldehydreaktiver Stelle bei 50 bis 90°C bis zu einer weitgehenden Bindung des Formaldehyds erhalten wurde, vor der Neutralisation mit Säuren und gegebenenfalls nach Zugabe wasserverträglicher organischer Hilfslösungsmittel mit

(B)

5 bis 50 Gew.-%, vorzugsweise 10 bis 30 Gew.-% (bezogen auf Festharz) einer unter den Verfahrensbedingungen der Elektroabscheidung praktisch wasserunlöslichen und mit dem Basisharz verträglichen Zumischkomponente, ausgewählt aus der Gruppe

(a) trockene Öle mit einer Jodzahl von mehr als 120, sowie synthetische Ester der in diesen Ölen enthaltenen Fettsäuren oder von Tallölfettsäuren mit Polyolen, gegebenenfalls auch vor polymerisierte Formen dieser genannten Verbindungen,

(b) Maleinsäureanlagerungsprodukte an hydroxylfreie Verbindungen der unter (a) geannten Art oder an ungesättigte Kohlenwasserstoffoligomere, -polymere oder -copolymere mit einem Molekulargewicht von 400 bis 3000, deren Carboxyl- oder Anhydridgruppen praktisch vollständig in Ester-, Amid- oder Imidgruppen übergeführt wurden,

(c) Verbindungen, welche mindestens 2 (Meth)-acryl- oder Allyldoppelbindungen aufweisen, mischt, die Mischung durch partielle Neutralisation der basischen Gruppen mit anorganischen und/oder organischen Säuren in eine wasserverdünnbare Salzform überführt und, gegebenenfalls unter teilweiser Entfernung des organischen Lösungsmittels, mit Wasser verdünnt.

2. Verfahren nach Anspruch 1, dadurch gekennzeichnet, dass für die Komponente (A) Epoxidharze auf Basis von Bisphenol A und/oder Phenolnovolaken eingesetzt werden.

3. Verfahren nach Anspruch 1 und 2, dadurch gekennzeichnet, dass für die Komponente (A) primäre Monoalkylamine mit mindestens 4 Kohlenstoffatomen eingesetzt werden.

4. Verfahren nach den Ansprüchen 1 bis 3, dadurch gekennzeichnet, dass für die Komponente (A) Mischungen aus Monoalkylaminen und/oder Alkylendiaminen mit Dialkylaminoalkylaminen eingesetzt werden.

5. Verfahren nach den Ansprüchen 1 bis 4, dadurch gekennzeichnet, dass die Umsetzung der Epoxidgruppen mit den Aminen bei 50 bis 90°C erfolgt.

6. Verfahren nach den Ansprüchen 1 bis 4, dadurch gekennzeichnet, dass die Umsetzung der Epoxidgruppen mit den Carboxylverbindungen bei 90 bis 120°C erfolgt.

7. Verfahren nach Anspruch 6, dadurch gekennzeichnet, dass man als Carboxylverbindungen Monocarbonsäuren mit 7 bis 20 C-Atomen einsetzt.

8. Verfahren nach den Ansprüchen 6 und 7, dadurch gekennzeichnet, dass man als Monocarboxylverbindungen Halbester von Dicarbonsäuren mit Monoalkoholen oder Oxazolidinverbindungen einsetzt.

9. Verfahren nach Anspruch 6, dadurch gekennzeichnet, dass man als Carboxylverbindung Anlagerungsverbindungen von Maleinsäureanhydrid an ungesättigte Öle und/oder hydroxylfreie Ester der in diesen Ölen enthaltenen Fettsäuren oder der Tallölfettsäuren mit Polyolen und/oder niedermolekulare ungesättigte Kohlenwasserstoffpolymere oder -oligomere, vorzugsweise Dienpolymere mit Molekulargewichten zwischen etwa 400 und etwa 3000, deren Anhydridgruppen mit Monohydroxylverbindungen unter Halbesterbildung geöffnet wurden, einsetzt.

10. Verfahren nach Anspruch 9, dadurch gekennzeichnet, dass die Carboxylverbindungen eine Säurezahl von 30 bis 130, vorzugsweise 35 bis 80 mg KOH/g aufweisen.

11. Verfahren nach den Ansprüchen 9 und 10, dadurch gekennzeichnet, dass die Anzahl der Carboxylgruppen der Halbester durch Umsetzung mit Monoepoxidverbindungen vermindert wird.

12. Verfahren nach den Ansprüchen 1 bis 11, dadurch gekennzeichnet, dass Phenole mit mindestens 2 formaldehydreaktiven Stellen, vorzugsweise Bisphenol A eingesetzt wird.

13. Verfahren nach den Ansprüchen 1 bis 12, dadurch gekennzeichnet, dass man in der Komponente (A) 0,1 bis 0,4 Mol der eingesetzten Phenolverbindung durch formaldehydreaktive Aminoverbindungen vom Typ des Harnstoffs, Thioharnstoffs, Imidoharnstoffs, Melamins, Acetoguanamins oder Benzoguanamins oder Mischungen dieser Verbindungen ersetzt und in einer gemeinsamen Reaktionsstufe mit der sekundären Aminogruppen aufweisenden Aminoverbindung und dem Formaldehyd umsetzt.

14. Verfahren nach den Ansprüchen 1 bis 13, dadurch gekennzeichnet, dass man in der Komponente (A) das ein- oder mehrkernige Phenol und/oder Alkylphenol ganz oder teilweise durch Aminoalkylierungsprodukte von monosubstituierten ein- oder zweikernigen Phenolen ersetzt, wobei der Substituent ein Alkylrest mit mindestens 4 C-Atomen oder ein Aralkylrest ist und das Amin mindestens 2 Aminowasserstoffe und mindestens 4 C-Atome aufweist.

15. Verfahren nach Anspruch 14, dadurch gekennzeichnet, dass man als Phenole Alkylphenole mit $C_8$ oder $C_9$-Alkylresten und/oder Bisphenol A einsetzt.

16. Verfahren nach den Ansprüchen 14 und 15, dadurch gekennzeichnet, dass man als Amine zur Aminoalkylierung Umsetzungsprodukte aus 1 Mol eines aliphatischen primären Diamins, vorzugsweise Hexamethylendiamin, und 2 Mol eines Acrylesters, vorzugsweise eines Butylacrylats, 2-Ethylhexylacrylats oder einer Monoepoxidverbindung, vorzugsweise der Glycidylester von KOCH-Säuren, einsetzt.

17. Verfahren nach den Ansprüchen 14 bis 16, dadurch gekennzeichnet, dass man die Aminoalkylierung der Phenole in Gegenwart des Epoxidharz-Amin-Adduktes durchführt.

18. Verfahren nach den Ansprüchen 16 und 17, dadurch gekennzeichnet, dass man die Aminoalkylierung der Phenole und die Umsetzung der Phenole bzw. des Formaldehyds mit dem Epoxid-Amin-Addukt in einer Verfahrensstufe durchführt.

19. Verfahren nach den Ansprüchen 1 bis 18, dadurch gekennzeichnet, dass zur Erzielung einer selbstvernetzenden Struktur der Bindemittel bei der Herstellung der Komponente (A) ein gegenüber den vorhandenen NH-Gruppen 30%iger molarer Überschuss an Formaldehyd eingesetzt wird.

20. Verfahren nach Anspruch 1, dadurch gekennzeichnet, dass man die Carboxylgruppen der Anlagerungsprodukte (Bb) durch Einbau in eine Komponente (A) verestert und das so erhaltene Reaktionsprodukt als Zumischkomponente (B) einsetzt.

21. Verfahren nach den Ansprüchen 1 bis 20, dadurch gekennzeichnet, dass das organische Hilfslösungsmittel aus der nach Neutralisationmit Säure mit Wasser verdünnten Bindemittelkombination zumindest teilweise durch Vakuumdestillation bei 30 bis 60°C entfernt wird.

22. Verfahren nach den Ansprüchen 1 bis 21, dadurch gekennzeichnet, dass die Pigmentierung der Bindemittel mit Hilfe eines pigmentierten Pasten-(Anreibe-)Harzes erfolgt.

23. Kathodisch abscheidbare Elektrotauchlack-Bindemittel herstellbar entsprechend einem Verfahren gemäss den Ansprüchen 1 bis 22.

## Claims

1. Process for producing cathodically depositable electro-deposition paint binders based on modified epoxy resins, characterised in that

(A)

95 to 50% b.w., preferably 90 to 70% b.w. (calculated on solids) of a reaction product obtained through reaction at 50 to 120°C of an epoxy resin with a least 2 epoxy groups and an epoxy equivalent weight of 180 to 1000, with

0.6 to 1.0 moles of primary amino groups per each available epoxy group, of a primary monoalkylamine and/or a primary alkylene diamine and/or a primary/tertiary alkylene diamine, and

0 to 0,4 moles per available epoxy group of a carboxylic compound or a secondary amine, to an epoxy value of practically 0 and further reaction of the resulting epoxy resin-amino-adduct at 50 to 90°C with, calculated on 1 mole of NH-groups,

0.5 to 1.0 moles of a mono- or polynuclear phenol and/or aminoalkylation product of monosubstituted mono- or dinuclear phenols or optionally, in portions, with a formaldehyde-reactive compound of the type of urea, melamine or guanamine, and with

0.25 to 0.9, preferably 0.6 to 0.8 moles formaldehyde per formaldehyde-reactive site, until the formaldehyde is substantially bound and, prior to neutralisation with acids, and, optionally, after addition of water tolerant organic solvents, is mixed with

(B)

5 to 50% b.w., preferably 10 to 30% b.w., calculated on solids, of an addition component, practically water insoluble under the conditions of electro-deposition and compatible with the base resin which is selected from the group consisting of

(a) drying oils with an iodine number of above 120, synthetic esters of the fatty acids contained in these oils or of tall oil fatty acids, with polyols, optionally pre-polymerised forms of the mentioned compounds,

(b) addition products of maleic anhydride to hydroxy-free compounds of the type mentioned under (a) or to unsaturated hydrocarbon oligomers, polymers or copolymers with a molecular weight of from 400 to 3000, the carboxy or anhydride groups of which have been practically completely transformed to ester, amide or imide groups,

(c) compounds carrying at least 2 (meth)acrylic or allyl double bonds,
the mixture, after being transformed to the water dilutable salt by partial neutralisation of the basic groups with inorganic and/or organic acids and, optionally with partial elimination of the organic solvent, being diluted with water.

2. Process according to claim 1, characterised in that for Component (A) epoxy resins based on bisphenol A and/or phenol novolaks are used.

3. Process according to claims 1 and 2, characterised in that for Component (A) primary monoalkylamines with at least 4 carbon atoms are used.

4. Process according to claims 1 to 3, characterised in that for Component (A) blends of monoalkylamines and/or alkylene diamines with dialkylaminoalkylamines are used.

5. Process according to claims 1 to 4, characterised in that the reaction of the epoxy groups with the amines is carried out at 50 to 90°C.

6. Process according to claims 1 to 4, characterised in that the reaction of the epoxy groups with the carboxylic compounds is carried out at from 90 to 120°C.

7. Process according to claim 6, characterised in that monocarboxylic acids with 7 to 20 carbon atomes are used as monocarboxylic acids.

8. Process according to claims 6 and 7, characterised in that semiesters of dicarboxylic acids with monoalcohols or oxazolidine compounds are used as monocarboxylic compounds.

9. Process according to claim 6, characterised in that as carboxylic compounds addition products of maleic acid anhydride to unsaturated oils and/or hydroxy-free esters of the oil fatty acids contained in these oils or tall oil fatty acids with polyols and/or low molecular unsaturated hydrocarbon polymers or oligomers, preferably diene polymers with molecular weights of between about 400 and about 3000 are used, the anhydride groups of which have been opened through semiester formation with monohydroxy compounds.

10. Process according to claim 9, characterised in that the carboxylic compounds have an acid value of from 30 to 130, preferably 35 to 80 mg KOH/g.

11. Process according to claims 9 and 10, characterised in that the number of carboxy groups of the semiesters is reduced through reaction with monoepoxy compounds.

12. Process according to claims 1 to 11, characterised in that phenols with at least 2 formaldehyde-reactive sites, preferably bisphenol A, are used.

13. Process according to claims 1 to 12, characterised in that in Component (A) 0.1 to 0.4 moles of the used phenolic compound are replaced by formaldehyde-reactive compounds of the type of urea, thiourea, imidourea, melamine, acetoguanamine or benzoguanamine or mixtures of these compounds, and that they are reacted in a joint reaction step with the secondary amino group containing amino compound and formaldehyde.

14. Process according to claims 1 to 13, characterised in that in Component (A) the mono- or polynuclear phenol and/or alkyl phenol is replaced partly or totally by aminoalkylation products of mono-substituted mono- or dinuclear phenols, the substituent being an alkyl radical with at least 4 carbon atoms or an aralkyl radical, and the amine carrying at least 2 amino hydrogen groups and at least 4 carbon atoms.

15. Process according to claim 14, characterised in that alkylphenols with $C_8$- or $C_9$- alkyl radicals and/or bisphenol A are used as phenols.

16. Process according to claims 14 and 15, characterised in that as amines for aminoalkylation reaction products are used of 1 mole of an aliphatic primary diamine, preferably hexamethylenediamine, and 2 moles of an acrylic ester, preferably a butyl acrylate, 2-ethylhexylacrylate or a monoepoxy compound, preferably the glycidyl esters of KOCH-acids.

17. Process according to claims 14 to 16, characterised in that the aminoalkylation of the phenols is carried out in the presence of the epoxy resin-amino-adduct.

18. Process according to claims 16 and 17, characterised in that the aminoalkylation of the phenols and the reaction of the phenols and of the formaldehyde with the epoxy resin-amino-adduct are carried out in one reaction step.

19. Process according to claims 1 to 18, characterised in that for obtaining a self-crosslinking structure of the binders a molar excess of 30% of formaldehyde over the NH-groups present is used in the preparation of Component (A).

20. Process according to claims 1 to 19, characterised in that the carboxy groups of the adducts (Bb) are esterified by introduction into a Component (A) and the thus obtained reaction product is used as addition resin (B).

21. Process according to claims 1 to 20, characterised in that the auxiliary organic solvent, after neutralisation with acids and dilution with water is at least partly vacuum-stripped from the binder combination at from 30 to 60°C.

22. Process according to claims 1 to 21, characterised in that the pigmentation of the binders is effected with the aid of a pigmented mill base resin.

23. Cathodically depositable electro-deposition binders producable according to the process set forth in claims 1 to 22.

## Revendications

1. Procédé de préparation de liants pour peintures électrodéposables à la cathode à base de résines époxy modifiées, caractérisé en ce que l'on mélange, avant la neutralisation avec des acides et éventuellement après addition de solvants auxiliaires organiques compatibles avec l'eau

(A)

95 à 50% en poids de préférence 90 à 70% en poids (par rapport aux substances solides) d'un produit de réaction obtenu à partie d'une résine époxy comprenant au moins 2 groupes époxy et de poids d'équivalent d'époxy de 180 à 1000 par réaction avec

0,6 à 1,0 mole de groupes amino primaires par groupe époxy présent d'une monoalkylamine primaire et/ou d'une alkylènediamine primaire et/ou d'une alkylène diamine primaire-tertiaire et

0 à 0,4 mole par groupe époxy présent d'un composé carboxyle ou d'une amine secondaire, entre 50 et 120°C jusqu'à un indice d'époxyde pratiquement nul par réaction consécutive du produit d'addition de résine époxy et d'amine obtenu avec par rapport à 1 mole de groupes-NH,

0,5 mole à 1 mole d'un phénol et/ou d'un alkylphénol mono- ou polycyclique et/ou d'un produit d'aminoalkylation de phénols mono- ou bicyclique monosubstitués ou éventuellement partiellement d'un composé capable de réagir avec le formaldéhyde du type de l'urée de la mélamine ou de la guanamine et avec

0,25 à 0,9, de préférence 0,6 à 0,8 mole de formaldéhyde par site capable de réagir avec le formaldéhyde entre 50 et 90°C jusqu'à une liaison importante formaldéhyde avec

(B)

5 à 50% en poids de préférence 10 à 30% en poids (par rapport à la résine solide) d'un constituant de mélange compatible avec la résine de base et pratiquement insoluble dans l'eau dans les conditions de l'électrodéposition choisi dans le groupe

a) des huiles siccatives d'indice d'iode supérieur à 120, ainsi que des esters synthétiques des acides gras contenus dans ces huiles ou d'acides gras de tallol et de polyols éventuellement aussi des formes prépolymérisées de ces composés

b) des produits d'addition de l'acide maléique sur des composés dépourvus d'hydroxyle du type cité en a) ou sur des oligomères des polymères ou des copolymères hydrocarbones insaturés de poids moleculaire compris entre 400 et 3000, dont les groupes carboxyles ou anhydrides ont été converties pratiquement totalement en groupes esters, amides ou imides,

c) des composés qui présentent au moins deux doubles liaisons (meth) acryliques ou allyliques, le mélange étant ensuite converti en une forme salifiée diluable à l'eau par neutralisation partielle des groupes basiques avec des acides minéraux et/ou organiques et étant dilué à l'eau éventuellement avec élimination partielle du solvant organique.

2. Procédé selon la revendication 1, caractérisé en ce que pour le constituant (A), on utilise des résines époxy à base de bisphénol A et/ou de novolaques phénoliques.

3. Procédé selon les revendications 1 et 2, caractérisé en ce que pour le constituant (A), on utilise des monoalkylamines primaires comportant au moins 4 atomes de carbone.

4. Procédé selon les revendications 1 à 3, caractérisé en ce que pour le constituant (A), on utilise des mélanges de monoalkylamines et/ou d'alkylènediamines et de dialkylaminoalkylamines.

5. Procédé selon les revendications 1 à 4, caractérisé en ce que la réaction des groupes époxydes avec les amines a lieu entre 50 et 90°C.

6. Procédé selon les revendications 1 à 4, caractérisé en ce que la réaction des groupes époxydes avec les composés carboxyles a lieu entre 90 et 120°C.

7. Procédé selon la revendication 6, caractérisé en ce que l'on utilise des acides monocarboxyliques comportant de 7 à 20 atomes de carbone en tant que composés carboxyles.

8. Procédé selon les revendications 6 et 7, caractérisé en ce que l'on utilise des hémi-esters d'acides dicarboxyliques et de monoalcools ou des composés d'oxazolidine en tant que composés monocarboxyles.

9. Procédé selon la revendication 6, caractérisé en ce que l'on utilise en tant que composé carboxyle des composés d'addition de l'anhydride maléique sur des huiles insaturées et/ou des esters dépourvus de groupes hydroxyles des acides gras contenus dans ces huiles ou des acides gras de tallol et de polyols et/ou des polymères ou des oligomères hydrocarbonés insaturés de faible poids moléculaire de préférence des polymères diéniques de poids moléculaire compris entre environ 400 et environ 3000 dont les groupes anhydrides ont été ouverts par des composés monohydroxyles avec formation d'hémi-esters.

10. Procédé selon la revendication 9, caractérisé en ce que les composés carboxyles présentent un indice d'acide de 30 à 130 de préférence de 35 à 80 mg de KOH/g.

11. Procédé selon les revendications 9 et 10, caractérisé en ce que le nombre des groupes carboxyles des hémi-esters est diminué par réaction avec des composés monoépoxydes.

12. Procédé selon les revendications 1 à 11, caractérisé en ce que l'on utilise des phénols présentant au moins deux sites capables de réagir avec le formaldéhyde de préférence le bisphénol A.

13. Procédé selon les revendications 1 à 12, caractérisé en ce que dans le constituant (A) l'on remplace de 0,1 à 0,4 mole du composé phénolique utilisé, par des composés amines capables de réagir avec le formaldéhyde du type de l'urée, de la thiourée, de l'imidourée, de la mélamine, de l'acétoguanamine ou de la benzoguanamine ou par des mélanges de ces composés et en ce qu'on les fait réagir dans une étape réactionnelle commune avec le composé amine présentant des groupes amino secondaires et avec le formaldéhyde.

14. Procédé selon les revendications 1 à 13, caractérisé en ce que dans le constituant (A) l'on remplace le phénol et/ou l'alkylphénol mono- ou plurinucléaire totalement ou partiellement par des produits d'aminoalkylation de phénols à un ou deux noyaux monosubstitués, le substituant étant un reste alkyle ayant au moins 4 atomes de carbone ou un reste aralkyle et l'amine possédant au moins 2 hydrogènes amines et au moins 4 atomes de carbone.

15. Procédé selon la revendication 14, caractérisé en ce que l'on utilise en tant que phénols des alkylphénols ayant des restes alkyles en C8 ou C9 et/ou le bisphénol A.

16. Procédé selon les revendications 14 et 15, caractérisé en ce que l'on utilise en tant qu'amines pour l'aminoalkylation des produits de conversion d'1 mole d'une diamine primaire aliphatique de préférence l'hexaméthylènediamine et de 2 moles d'un ester acrylique de préférence un acrylate de butyle, un acrylate de 2-éthylhexyle ou d'un composé monoépoxyde de préférence les glycidylesters d'acides de Koch.

17. Procédé selon les revendications 14 à 16, caractérisé en ce que l'on exécute l'aminoalkylation des phénols en présence du produit d'addition de résine époxy et d'amine.

18. Procédé selon les revendications 16 et 17, caractérisé en ce que l'on exécute l'aminoalkylation des phénols et la réaction des phénols ou du formaldéhyde avec le produit d'addition d'époxyde et d'amine en une étape réactionnelle.

19. Procédé selon les revendications 1 à 18, caractérisé en ce que l'on utilise un excès molaire de formaldéhyde de 30%, par rapport aux groupes -NH présents en vue d'obtenir une structure autoréticulante des liants lors de la préparation du constituant (A).

20. Procédé selon la revendication 1, caractérisé en ce que l'on estérifie les groupes carboxyles des produits d'addition (Bb) par intégration dans un constituant (A) et en ce que l'on utilise le produit de la réaction ainsi obtenu comme constituant de mélange (B).

21. Procédé selon les revendications 1 à 20, caractérisé en ce que le solvant organique auxiliaire est éliminé au moins en partie de la combinaison de liants diluée à l'eau après neutralisation avec un acide par distillation sous vide entre 30 et 60°C.

22. Procédé selon les revendications 1 à 21, caractérisé en ce que la pigmentation des liants est réalisée à l'aide d'une résine (de recouvrement) pateuse pigmentée.

23. Liants pour peintures électrodéposables à la cathode qui peuvent être préparés par un procédé selon les revendications 1 à 22.